# EUROPÄISCHE PATENTSCHRIFT

(11) **EP 0 470 659 B1**
(45) Veröffentlichungstag und Bekanntmachung des Hinweises auf die Patenterteilung: **13.04.1994**
(21) Anmeldenummer: 91201914.8
(22) Anmeldetag: 22.07.1991
(51) Int. Cl.: B01D 53/36, A62D 3/00

(54) **Verfahren zur Abtrennung von Staub und organischen Verbindungen aus Abgasen**
Process for separating dust and organic compounds from flue gases
Procédé pour éliminer la poussière et des composés organiques des gaz de rejet

(30) Priorität: 04.08.1990 DE 4024804
(43) Veröffentlichungstag der Anmeldung: 12.02.1992
(73) Patentinhaber: METALLGESELLSCHAFT Aktiengesellschaft, 60015 Frankfurt (DE)
(72) Erfinder: Weber, Ekkehard, Prof. Dr., W-4300 Essen 17 (DE)

(56) Entgegenhaltungen:
- DE-A- 3 443 722
- DE-A- 3 615 027
- DE-A- 3 623 492
- US-A- 4 053 557

## Beschreibung

Die Erfindung bezieht sich auf ein Verfahren zur Abtrennung von Staub und organischen Verbindungen, insbesondere von Dioxinen, aus sauerstoffhaltigen Abgasen, insbesondere aus Verbrennungsabgasen.

In Müllverbrennungsanlagen und Kraftwerken entstehen bei der Verbrennung von Abfällen sowie festen und flüssigen Brennstoffen Abgase, die durch Staub und durch geringe Mengen organischer Verbindungen verunreinigt sind. Bei den organischen Verbindungen handelt es sich insbesondere um hochkondensierte aromatische Kohlenwasserstoffe sowie Dioxine, die mit dem Staub sowie mit dem Abgas aus den Verbrennungsanlagen ausgetragen werden. Mit dem Sammelbegriff "hochkondensierte aromatische Kohlenwasserstoffe" werden die mehrkernigen Aromaten bezeichnet, die auch eine oder mehrere OH-Gruppen aufweisen können. Mit dem Sammelbegriff "Dioxine" werden die polyhalogenierten Dibenzo-p-Dioxine und die polyhalogenierten Dibenzofurane bezeichnet. Zu den Dioxinen gehören insgesamt 210 Isomere, von denen einige außerordentlich giftig sind. Die hochkondensierten aromatischen Kohlenwasserstoffe sind ebenfalls gesundheitsschädlich, da sie als krebserregende Substanzen gelten. Wegen der Giftigkeit der hochkondensierten aromatischen Kohlenwasserstoffe und der Dioxine ist es erforderlich, diese Verbindungen aus dem Abgas zu entfernen. Bei vielen Fabrikationsprozessen entstehen ferner Abgase, die neben Staub auch organische Verbindungen, wie z.B. Formaldehyd, Benzol oder Phenol, enthalten. Auch diese organischen Verbindungen müssen aus den Abgasen entfernt werden, da sie Umweltgifte darstellen und die menschliche Gesundheit erheblich beeinträchtigen. Sowohl die hochkonensierten aromatischen Kohlenwasserstoffe, als auch die Dioxine, als auch die niedermolekularen organischen Verbindungen liegen in den Abgasen, die in der Regel eine Temperatur von 150 bis 600°C aufweisen, gasförmig oder in sublimierter Form vor, während der Staub in Form von feinen Feststoffpartikeln im Abgas suspendiert ist.

Es ist bekannt, daß der Staub durch Filtration und die organischen Verbindungen durch nachgeschaltete Verbrennung oder durch nachgeschaltete Adsorption aus den Abgasen abgetrennt werden können, wobei die Verbrennung auch in Gegenwart eines Katalysators durchgeführt werden kann. Da in den Abgasen immer mehr oder weniger Sauerstoff enthalten ist, wird für die Verbrennungsreaktion zumeist keine zusätzliche Luft- bzw. Sauerstoffzufuhr benötigt. Für die katalytischen Verbrennungsprozesse werden vor allem Edelmetallkatalysatoren verwendet, die als aktive, katalytisch wirkende Substanz vorzugsweise Platin enthalten, das auf einen wabenartigen Träger aus einem keramischen Material aufgebracht ist. Die katalytische Verbrennung der in den Abgasen in sehr geringer Menge enthaltenen organischen Verbindungen erfolgt etwa zwischen 250 und 400°C. Die nicht katalytische Verbrennung erfolgt hingegen bei 700 bis 1000°C, was insbesondere bei Kleinanlagen zu hohen zusätzlichen Aufwendungen für Energie, Verbrennungseinrichtungen und Energierückgewinnung führt. Ein weiterer Nachteil der nicht katalytischen Verbrennung besteht darin, daß organische Schadstoffe nicht vollständig zu Kohlendioxid und Wasser oxidiert werden, wenn die Temperatur nicht ausreichend hoch und die Verweilzeiten der Gase im Verbrennungsraum nicht genügend lang sind. Das Maximum der Kohlenmonoxiderzeugung bei derartigen Verbrennungsprozessen liegt beispielsweise zwischen 450 und 750°C. Die katalytischen Verbrennungsprozesse haben den Nachteil, daß die Edelmetall-Katalysatoren durch Vergiftung inaktiviert werden und daß es auf den Katalysatoren durch Staub oder Rußteilchen zu dauerhaften Ablagerungen kommt. Deshalb ist es heute üblich, vor der katalytischen Verbrennung der in den Abgasen enthaltenen organischen Verbindungen den Staub abzutrennen, was insbesondere durch Gewebefilter möglich ist.

Der Erfindung liegt die Aufgabe zugrunde, ein Verfahren zur gleichzeitigen Abscheidung von Staub und von gasförmigen organischen Verbindungen aus Abgasen bereitzustellen, das geringe Reststaubgehalte im Reingas gewährleistet, das die organischen Verbindungen auch im Langzeitbetrieb zuverlässig aus den Abgasen abtrennt, das mit einem tolerierbaren Druckverlust arbeitet und dessen Prozeßapparaturen eine lange Lebensdauer haben.

Die der Erfindung zugrundeliegende Aufgabe wird dadurch gelöst, daß das sauerstoffhaltige Abgas bei 150 bis 600°C und einer Anströmgeschwindigkeit von 0,5 bis 10 cm/sec. durch mindestens ein katalytisch wirkendes Filterelement geleitet wird, welches eine Dicke von 2 bis 40 mm hat sowie aus einem keramischen Trägermaterial und den katalytisch wirksamen Substanzen besteht, wobei das Trägermaterial aus Al₂O₃, SiO₂ und einem anorganischen Bindemittel zusammengesetzt ist sowie eine Faser- oder Granalienstruktur aufweist und wobei als katalytisch wirkende Substanzen mindestens ein Oxid oder mindestens ein Salz der Elemente mit den Ordnungszahlen 23 bis 30 sowie des Wolframs und Molybdäns in einer Menge von 0,2 bis 25 Gew.%, bezogen auf das keramische Trägermaterial, verwendet werden.

Es hat sich in überraschender Weise gezeigt, daß die nach dem erfindungsgemäßen Verfahren gereinigten Abgase einen Reststaubgehalt von < 10 mg/Nm³ aufweisen und daß organische Verbindungen im gereinigten Abgas in so geringer Menge vorliegen, daß die vom Gesetzgeber vorgeschriebenen Höchstwerte weit unterschritten werden; in vielen Fällen sind die im Abgas enthaltenen organischen Verbindungen nach der Durchführung des erfindungsgemäßen Verfahrens nicht mehr nachweisbar. Es hat sich vor allem gezeigt, daß durch die gleichzeitige Entstaubung und katalytische Oxidation der organischen Verbindungen keine Störungen des Reinigungsprozesses verursacht werden, denn es wurden weder Vergiftungen des Katalysators noch Beeinträchtigungen des katalytischen Verbrennungsprozesses durch den am katalytisch wirkenden Filterelement abgeschiedenen Staub beobachtet. Obwohl aus der DE-A-3 634 360 ein Verfahren zur gleichzeitigen Entstaubung sowie zur selektiven katalytischen Reduktion von Stickoxiden, die in Gasen enthalten sind, bekannt ist, bei dem die staub- und stickoxidhaltigen Gase mit dem Reduktionsmittel gemischt und die Mischung bei 150 bis 600°C und einer Anströmgeschwindigkeit von 0,5 bis 5 cm/sec. durch mindestens ein katalytisch wirkendes Filterelement geleitet wird, welches eine Dicke von 2 bis 20 mm hat sowie aus einem keramischen Trägermaterial und den katalytisch wirksamen Substanzen besteht, und bei dem das keramische Trägermaterial aus Al₂O₃, SiO₂ und/oder SiC sowie aus einem anorganischen Bindemittel zusammengesetzt ist und eine Faser- oder Granalienstruktur aufweist und bei dem als katalytisch wirkende Substanzen Oxide und Salze der Elemente mit den Ordnungszahlen 23 bis 30 sowie des Wolframs und Molybdäns in einer Menge von 0,4 bis 25 Gew.%, bezogen auf das keramische Trägermaterial, verwendet werden, war es für den Fachmann überraschend, daß das an sich bekannte Filterelement auch zur gleichzeitigen Entstaubung und oxidativen Entfernung organischer Verbindungen erfolgreich eingesetzt werden kann.

Nach der Erfindung ist es besonders vorteilhaft, wenn das keramische Trägermaterial aus 30 bis 70 Gew.% Al₂O₃, 15 bis 50 Gew.% SiO₂ und 1 bis 10 Gew.% anorganischem Bindemittel besteht. Als anorganisches Bindemittel werden Alkalisilikate, Erdalkalisilikate, Alkaliphosphate oder Erdalkaliphosphate verwendet. Ein derartig zusammengesetztes keramisches Trägermaterial hat sehr gute mechanische Eigenschaften, die dafür verantwortlich sind, daß das Filterelement eine hohe Lebensdauer besitzt.

Das Filterelement besteht nach der Erfindung entweder aus Filzen oder Vliesen, die aus Fasern des keramischen Trägermaterials durch Verdichtung hergestellt und mit den katalytisch wirkenden Substanzen dotiert worden sind oder aus porösen Sinterkörpern, die aus Granalien des keramischen Trägermaterials durch Sintern hergestellt und mit den katalytisch wirkenden Substanzen dotiert worden sind. Die Filze, Vliese und keramischen Sinterkörper besitzen aufgrund der Faser- bzw. Granalienstruktur gasdurchlässige Poren, welche die für eine hohe katalytische Effektivität erforderlichen spezifischen Oberflächengrößen sowie die nötigen Gasverweilzeiten ermöglichen. Im Gegensatz zu den Geweben handelt es sich bei den Filzen und Vliesen um Filterelemente mit langen und sehr kleinen Gasdurchführungskanälen, so daß ein inniger Kontakt zwischen den gasförmigen organischen Verbindungen, dem Sauerstoff und den katalytisch wirkenden Zentren gegeben ist. Aufgrund der hohen Porosität dieser Materialien können sie bei vergleichsweise kleinen Druckverlusten sowohl zur Abtrennung von Staub wie auch zur katalytischen Oxidation vorteilhaft verwendet werden. Die Filze, Vliese und keramischen Sinterkörper können gegenüber Gewebefiltern bei hohen Temperaturen bis 700°C eingesetzt werden, und sie haben gegenüber den Gewebefiltern eine erheblich verbesserte Entstaubungsleistung.

Das erfindungsgemäße Verfahren kann besonders vorteilhaft durchgeführt werden, wenn das aus Filzen oder Vliesen bestehende Filterelement die Form eines Schlauches, einer Tasche oder einer Platte hat oder wenn das aus porösen Sinterkörpern bestehende Filterelement die Form einer Filterkerze hat.

Das Dotieren des keramischen Trägermaterials mit den katalytisch wirkenden Substanzen erfolgt in bekannter Weise dadurch, daß diese Substanzen vor, während oder nach der Herstellung der Filze, Vliese oder Sinterkörper auf das keramische Trägermaterial aufgebracht werden. Dies kann beispielsweise durch Tränken der Filterelemente mit Salzlösungen und anschließendes Erhitzen der mit den Salzen dotierten Filterelemente erfolgen. Das Abgas sollte 1 bis 25 Gew.% Sauerstoff enthalten, damit die Oxidationsreaktion mit genügend hoher Geschwindigkeit abläuft.

Das erfindungsgemäße Verfahren wird nachfolgend anhand eines Ausführungsbeispiels näher erläutert.

Als Filterelement wurde ein Schlauchfilter benutzt, dessen keramisches Trägermaterial aus zu einem Filz verdichteten Fasern bestand. Das keramische Trägermaterial hatte folgende Zusammensetzung: 46 Gew.% Al₂O₃, 45 Gew.% SiO₂, Rest anorganisches Bindemittel. Das Filterelement enthielt 10 g Fe³⁺, 20 g V⁵⁺ und 10 g Cr³⁺/kg keramisches Trägermaterial, wobei die katalytisch wirksamen Substanzen in Form ihrer Oxide vorlagen. Der Filz des Filterelements, das zur Durchführung des Verfahrens verwendet wurde, hatte eine Dicke von 20 mm. Das Verfahren wurde bei einer Temperatur von 300 bis 400°C sowie einer Anströmgeschwindigkeit von 7,5 cm/sec. durchgeführt und erbrachte während einer Betriebszeit von 1500 Stunden eine konstante Leistung. Bei dem aus einem Filz bestehenden Schlauchfilter wurde eine sehr gute Entstaubungsleistung beobachtet, und es kam auch bei einem Langzeitbetrieb nicht zu Verstopfungen des Filterelements. Die katalytische Wirksamkeit des Filterelements blieb in vollem Umfang während der Langzeiterprobung erhalten.

Bei einer mittleren Korngröße des Staubs von ca. 5 µm und einem Staubgehalt des Abgases von 10 g/Nm³ wurde im Dauerbetrieb ein durchschnittlicher Reststaubgehalt im gereinigten Abgas von 1 mg/Nm³ erreicht. Die im Abgas enthaltenen organischen Verbindungen Formaldehyd und Phenol, die in einer Menge von je 100 mg/Nm³ vorlagen, konnten im Reingas nicht mehr nachgewiesen werden. Das verunreinigte Abgas hatte einen Sauerstoffgehalt von ca. 14 %.

Das erfindungsgemäße Verfahren wurde auch zur Reinigung eines Abgases einer Müllverbrennungsanlage während 500 Stunden eingesetzt. Dabei zeigte sich, daß der Staubgehalt des Reingases auf < 1 mg/Nm³ gehalten werden konnte und daß im Reingas die Summe der TCDD-Äquivalente nach BGA während der Betriebszeit immer unterhalb 0,1 ng/Nm³ lag. Das Abgas hatte einen Sauerstoffgehalt von ca. 9 %.

## Patentansprüche

1. Verfahren zur Abtrennung von Staub und organischen Verbindungen, insbesondere von Dioxinen, aus sauerstoffhaltigen Abgasen, insbesondere aus Verbrennungsabgasen, dadurch gekennzeichnet, daß das sauerstoffhaltige Abgas bei 150 bis 600°C und einer Anströmgeschwindigkeit von 0,5 bis 10 cm/sec. durch mindestens ein katalytisch wirkendes Filterelement geleitet wird, welches eine Dicke von 2 bis 40 mm hat sowie aus einem keramischen Trägermaterial und den katalytisch wirksamen Substanzen zusammengesetzt ist, wobei das Trägermaterial aus Al₂O₃ SiO₂ und einem anorganischen Bindemittel besteht sowie eine Faser- oder Granalienstruktur aufweist und wobei als katalytisch wirkende Substanzen mindestens ein Oxid oder mindestens ein Salz der Elemente mit den Ordnungszahlen 23 bis 30 sowie des Wolframs und Molybdäns in einer Menge von 0,2 bis 25 Gew.%, bezogen auf das keramische Trägermaterial, verwendet werden.

2. Verfahren nach Anspruch 1, dadurch gekennzeichnet, daß das keramische Trägermaterial aus 30 bis 70 Gew.% Al₂O₃, 15 bis 50 Gew.% SiO₂ und 1 bis 10 Gew.% anorganischem Bindemittel besteht.

3. Verfahren nach den Ansprüchen 1 bis 2, dadurch gekennzeichnet, daß das Filterelement aus Filzen oder Vliesen besteht, die aus Fasern des keramischen Trägermaterials durch Verdichtung hergestellt und mit den katalytisch wirkenden Substanzen dotiert worden sind.

4. Verfahren nach den Ansprüchen 1 bis 2, dadurch gekennzeichnet, daß das Filterelement aus porösen Sinterkörpern besteht, die aus Granalien des keramischen Trägermaterials durch Sintern hergestellt und mit den katalytisch wirkenden Substanzen dotiert worden sind.

5. Verfahren nach Anspruch 3, dadurch gekennzeichnet, daß das Filterelement die Form eines Schlauches, einer Tasche oder einer Platte hat.

6. Verfahren nach Anspruch 4, dadurch gekennzeichnet, daß das Filterelement die Form einer Filterkerze hat.

## Claims

1. A method for separating off dust and organic compounds, in particular dioxins, from oxygen-containing waste gases, in particular from combustion waste gases, characterised in that the oxygen-containing waste gas is passed at 150 to 600°C and at a rate of advance of 0.5 to 10 cm/sec through at least one catalytically active filter element which has a thickness of 2 to 40 mm and is composed of a ceramic support material and the catalytically active substances, the support material consisting of Al₂O₃, SiO₂ and an inorganic binder and having a fibrous or granular structure, and with at least one oxide or at least one salt of the elements having the atomic numbers 23 to 30 and of tungsten and molybdenum in a quantity of 0.2 to 25% by weight, relative to the ceramic support material, being used as catalytically acting substances.

2. A method according to Claim 1, characterised in that the ceramic support material consists of 30 to 70% by weight Al₂O₃, 15 to 50% by weight SiO₂ and 1 to 10% by weight inorganic binder.

3. A method according to Claims 1 to 2, characterised in that the filter element consists of felts or non-woven materials which have been produced from fibres of the ceramic support material by compaction and have been doped with the catalytically active substances.

4. A method according to Claims 1 to 2, characterised in that the filter element consists of porous sintered compacts which have been produced from granules of the ceramic support material by sintering and have been doped with the catalytically active substances.

5. A method according to Claim 3, characterised in that the filter element is in the form of a tube, a pocket or a plate.

6. A method according to Claim 4, characterised in that the filter element is in the form of a filter cartridge.

## Revendications

1. Procédé de séparation de poussières et de composés organiques, notamment de dioxines, de gaz de rejet contenant de l'oxygène, notamment de gaz de rejet de combustion, caractérisé en ce qu'il consiste à faire passer le gaz de rejet contenant de l'oxygène entre 150 et 600°C et à une vitesse d'affluence de 0,5 à 10 cm/seconde dans au moins un élément filtrant à action catalytique, qui a une épaisseur de 2 à 40 mm et qui est composé d'une matière support céramique et de substances efficaces catalytiquement, la matière support étant en Al₂O₃, SiO₂ et en un liant minéral et présentant une structure de fibres ou de granulés, au moins un oxyde ou au moins un sel des éléments ayant les numéros atomiques de 23 à 30, ainsi que du tungstène et du molybdène, étant utilisé en une quantité représentant de 0,2 à 25% du poids de matière support céramique, comme substances à action catalytique.

2. Procédé suivant la revendication 1, caractérisé en ce que la matière support céramique est constituée de 30 à 70% en poids d'Al₂O₃, de 15 à 50% en poids de SiO₂ et de 1 à 10% en poids de liant minéral.

3. Procédé suivant la revendication 1 ou 2, caractérisé en ce que l'élément filtrant est constitué de feutres ou de non tissés, qui ont été fabriqués en fibres de la matière support céramique par compression et qui ont été dopés par des substances à action catalytique.

4. Procédé suivant la revendication 1 ou 2, caractérisé en ce que l'élément filtrant est en pièces frittés poreuses, qui ont été fabriquées à partir de grains de la matière support céramique par frittage et qui ont été dopés par les substances à action catalytique.

5. Procédé suivant la revendication 3, caractérisé en ce que l'élément filtrant a la forme d'un tube, d'une poche ou d'une plaque.

6. Procédé suivant la revendication 4, caractérisé en ce que l'élément filtrant a la forme d'une bougie de filtre.
